# DEMANDE DE BREVET EUROPEEN

(11) **EP 4 309 935 A2**
(43) Date de publication de la demande: **24.01.2024**
(21) Numéro de dépôt: 23178614.6
(22) Date de dépôt: 12.06.2023
(51) Int. Cl.: B60K 1/00

(54) **VÉHICULE DE TRANSPORT ROUTIER ÉLECTRIQUE À PILE À COMBUSTIBLE ET PROCÉDÉ DE CONVERSION D'UN VÉHICULE DE TRANSPORT ROUTIER THERMIQUE EN UN TEL VÉHICULE**

(30) Priorité: 24.06.2022 FR 2206316
(71) Demandeur: SAFRA, 81000 Albi (FR)
(72) Inventeur: ROUCHY, Nicolas, 81250 ALBAN (FR); QUENET, Corentin, 81120 LE TRAVET (FR); ROUBINEAU, Mathieu, 81120 POULAN-POUZOLS (FR)
(74) Mandataire: Argyma

(57) **Abrégé**

Un véhicule de transport routier (1) de personnes comprenant une structure primaire (10), la structure primaire (10) comprenant une ossature de plancher (13) délimitant, en partie supérieure, un compartiment de vie (20) comportant une pluralité de sièges (21) fixés sur l'ossature de plancher (13), et en partie inférieure, au moins un compartiment moteur (30) comportant une chaîne de propulsion comprenant au moins un moteur électrique (3) et au moins une pile à combustible (4) pour alimenter le moteur électrique (3), ledit véhicule de transport routier (1) comprenant au moins un réservoir de combustible (2) monté dans le compartiment de vie (20) et relié fluidiquement à la pile à combustible (4) dans le compartiment moteur (30).

## Description

### DOMAINE TECHNIQUE

La présente invention concerne le domaine des véhicules de transport routier à pile à combustible, en particulier les autocars et les autobus à hydrogène, notamment obtenus par conversion d'un véhicule de transport routier thermique.

De manière connue, un véhicule de transport routier à hydrogène est un véhicule à propulsion électrique dont l'énergie électrique est produite essentiellement dans le véhicule, à partir d'hydrogène. Un tel véhicule, tel qu'un autocar ou un autobus à hydrogène, comprend classiquement une chaîne de propulsion comprenant une pile à combustible qui est alimentée par de l'hydrogène stocké dans des réservoirs. La pile à combustible est configurée pour produire de l'énergie électrique par réaction d'oxydoréduction à partir d'hydrogène et d'oxygène prélevé dans l'air. La chaîne de propulsion comprend également un moteur électrique alimenté en énergie électrique par la pile à combustible pour assurer la propulsion du véhicule. Un tel véhicule comprend également une batterie électrique pour stocker l'énergie électrique produite par la pile à hydrogène, pour fournir un complément d'énergie au moteur lors des appels de puissance et pour la récupération d'énergie lors du freinage.

De manière connue, la réaction d'oxydoréduction dans la pile à hydrogène n'émet que de la vapeur d'eau, ce qui en fait un véhicule de transport routier particulièrement écologique, destiné à remplacer les véhicules thermiques qui produisent des gaz à effet de serre et des particules polluantes. Un véhicule de transport routier à hydrogène est en outre silencieux et comporte une autonomie plus élevée que les véhicules électriques à batteries rechargeables. Le temps de recharge des réservoirs d'hydrogène est également plus court que celui des batteries des véhicules électriques.

Dans une logique d'économie circulaire et de protection de l'environnement, il est souhaité de produire un véhicule à hydrogène à partir d'un véhicule thermique existant, un tel procédé étant connu sous les termes de « rétrofit » ou de « surcyclage ». Le but est de réutiliser au maximum les composants du véhicule thermique existant afin de limiter l'ajout de nouvelles matières et le besoin de certification des caractéristiques du véhicule. Toutefois, un tel procédé se heurte à plusieurs obstacles, notamment celui de l'intégration des réservoirs à hydrogène. En effet, dans un véhicule thermique, l'espace alloué au réservoir de carburant, notamment d'essence, est insuffisant pour héberger les réservoirs d'hydrogène et ne peut être agrandi car il est délimité par la structure primaire du véhicule.

De manière classique, dans le cas d'un autocar ou d'un autobus à hydrogène d'origine, les réservoirs sont montés sur le toit, qui est homologué avec un gabarit plus important qu'un toit de véhicule thermique afin de conserver le gabarit en termes de hauteur, pour respecter l'homologation originale du véhicule mais aussi son centre de gravité et la résistance de sa structure originelle. Pour convertir un véhicule thermique en un véhicule à hydrogène, l'intégration des réservoirs sur le toit nécessiterait de dépasser le gabarit, ce qui est exclu. De plus, il n'est pas envisageable de modifier la hauteur du toit car cela impliquerait de modifier la structure primaire du véhicule et nécessiterait une nouvelle homologation de la structure primaire, ce qui rendrait le procédé de « rétrofit » trop coûteux.

Pour remédier à cet inconvénient, une solution serait d'intégrer les réservoirs dans la soute de l'autocar, toutefois cela réduirait de manière significative l'espace de rangement des bagages, ce qui est indésirable.

Il est connu par US2020/238839A1 un véhicule à cabine ouverte alimenté par une pile à combustible à hydrogène, dont les réservoirs d'hydrogène sont montés à l'arrière et adaptés pour se décharger directement à l'extérieur en cas de fuite. Une telle solution n'est pas sécuritaire dans un véhicule à cabine fermé tel qu'un autocar ou un autobus.

L'invention vise ainsi à éliminer au moins certains de ces inconvénients.

### PRESENTATION DE L'INVENTION

L'invention concerne un véhicule de transport routier de passagers comprenant une structure primaire, la structure primaire comprenant une ossature de plancher délimitant :
- en partie supérieure, un compartiment de vie comportant une pluralité de sièges fixés sur l'ossature de plancher, et
- en partie inférieure, au moins un compartiment moteur comportant une chaîne de propulsion comprenant au moins un moteur électrique et au moins une pile à combustible pour alimenter le moteur électrique.

L'invention est remarquable en ce que ledit véhicule de transport routier comprend au moins un réservoir de combustible monté dans le compartiment de vie et relié fluidiquement à la pile à combustible dans le compartiment moteur.

Un tel emplacement des réservoirs de combustible dans le compartiment de vie est avantageusement compatible avec n'importe quelle architecture de véhicule de transport routier. L'invention présente un intérêt particulier pour les véhicules de transport routier électriques à pile à combustible obtenus par conversion d'un véhicule de transport routier thermique, ce procédé étant connu sous le terme de « rétrofit » ou de « surcyclage ». Pour de tels véhicules, l'architecture d'origine est celle d'un véhicule de transport routier thermique et l'espace prévu pour le réservoir de carburant est insuffisant pour y loger les réservoirs de combustible. Le gabarit en hauteur de tels véhicules n'est en outre pas prévu pour permettre l'installation des réservoirs à combustible sur le toit, comme cela est classiquement fait pour les véhicules à pile à combustible d'origine. L'invention permet ainsi de ne pas dépasser le gabarit en hauteur réglementé. L'invention permet également de limiter l'encombrement induit par les réservoirs de combustible en préservant le volume du compartiment de soute par exemple.

De préférence, le véhicule de transport routier se présente sous la forme d'un autocar. Dans un autocar, les réservoirs de combustible comportent un volume très faible par rapport à celui du compartiment de vie, ce qui n'impacte avantageusement que faiblement l'encombrement du compartiment de vie.

De préférence, la pile à combustible se présente sous la forme d'une pile à hydrogène. De manière avantageuse, un véhicule à hydrogène n'émet que de la vapeur d'eau ce qui le rend écologique, est silencieux et comporte une autonomie plus élevée que les véhicules électriques à batteries rechargeables. Le temps de recharge des réservoirs d'hydrogène est également plus court que celui des batteries des véhicules électriques.

Selon un aspect de l'invention, l'ensemble du ou des réservoirs de combustible est monté dans le compartiment de vie. Le toit est ainsi exempt de réservoirs, ce qui permet de garantir un gabarit en hauteur réglementaire, peu importe l'architecture du véhicule. L'invention est ainsi particulièrement adaptée pour un véhicule dont l'architecture d'origine est celle d'un véhicule thermique qui a été converti en véhicule électrique à pile à combustible. La soute est également exempte de réservoirs ce qui permet un gain de place pour les bagages.

Selon un aspect de l'invention, au moins un réservoir de combustible est aligné verticalement par rapport au compartiment moteur, de préférence par rapport à la pile à combustible dans le compartiment moteur. Le réservoir de combustible s'étend ainsi à proximité de la pile à combustible. Ceci permet avantageusement de pouvoir raccorder de manière simple, sécuritaire et économique la pile à combustible à l'ensemble du ou des réservoirs. En effet, les lignes d'alimentation en combustible reliant les réservoirs à la pile à combustible s'étendent avantageusement dans un espace confiné sur une courte distance.

Selon un aspect de l'invention, le véhicule de transport routier comprend un plancher d'habillage revêtant l'ossature de plancher et séparant le compartiment de vie du compartiment moteur. Ceci permet d'assurer la séparation physique entre la pile à combustible et le compartiment de vie pour les passagers. De préférence, le plancher d'habillage est étanche pour éviter tout risque de fuite au niveau de l'espace passagers.

Selon un aspect préféré de l'invention, la hauteur totale H2 de l'ensemble du ou des réservoirs de combustible est inférieure ou égale à la hauteur H21 des sièges. Ceci permet avantageusement de laisser libre l'issue de secours prévue à l'arrière du véhicule de transport routier. En outre, ceci permet d'assurer la visibilité arrière du conducteur du véhicule.

Selon un aspect de l'invention, le compartiment de vie comprend une cloison de séparation délimitant de manière séparée :
- un espace réservoir, dans lequel est monté l'ensemble du ou des réservoirs de combustible, et
- un espace passagers, dans lequel sont montés les sièges.

Une telle cloison de séparation permet avantageusement de confiner les réservoirs de combustible dans un espace dédié à l'écart des passagers.

Selon un aspect de l'invention, le compartiment de vie comporte au moins une ouverture d'aération de l'espace réservoir vers l'extérieur, l'ouverture d'aération se présentant de préférence sous la forme d'une grille. Une telle ouverture assure l'aération de l'espace réservoir. Ceci présente l'avantage d'assurer le renouvellement d'air dans l'espace réservoir, notamment en cas de fuite des réservoirs d'hydrogène. Ceci permet également de réguler la température dans l'espace réservoirs, par échanges thermiques avec l'extérieur.

Selon un aspect de l'invention, la cloison de séparation est étanche au combustible des réservoirs. Ceci permet de protéger l'espace passager de tout risque de fuite de combustible.

De préférence, la cloison de séparation isole thermiquement l'espace passagers de l'espace réservoir. Ceci permet de protéger l'espace passagers des écarts de température pouvant être observés au niveau des réservoirs.

L'invention concerne également un procédé de conversion d'un véhicule de transport routier thermique de passagers en un véhicule de transport routier électrique tel que décrit précédemment, ledit véhicule de transport routier thermique comprenant une structure primaire, la structure primaire comprenant une ossature de plancher délimitant :
- en partie supérieure, un compartiment de vie comportant une pluralité de sièges fixés sur l'ossature de plancher, et
- en partie inférieure, au moins un compartiment moteur comprenant une chaîne de propulsion comprenant au moins un moteur thermique,
- ledit procédé de conversion comprenant :
   - une étape de remplacement, dans le compartiment moteur, du moteur thermique par au moins un moteur électrique et au moins une pile à combustible pour alimenter le moteur électrique,
   - une étape de retrait d'au moins un siège du compartiment de vie, et
   - une étape d'installation d'au moins un réservoir de combustible dans le compartiment de vie, à la place du siège retiré.

Un tel procédé de conversion, également connu sous les termes de « rétrofit » et de « surcyclage », permet avantageusement de réutiliser l'architecture existante d'un véhicule thermique en limitant l'apport de nouvelles matières. Le gain est ainsi à la fois écologique et économique, en réutilisant et en revalorisant par le haut des systèmes existants. En outre, un tel procédé de conversion est avantageusement à la fois simple à mettre en oeuvre et universel car compatible avec n'importe quelle architecture de véhicule thermique existante.

De préférence, le procédé comprend une étape d'installation d'une cloison de séparation délimitant de manière séparée :
- un espace réservoir, dans lequel est monté l'ensemble du ou des réservoirs de combustible, et
- un espace passagers, dans lequel sont montés les sièges.

Selon un aspect de l'invention, le procédé de conversion comprend une étape de formation, dans le compartiment de vie, d'au moins un accès vers l'extérieur, l'étape d'installation étant mise en oeuvre via ledit accès. De manière avantageuse, l'étape d'installation est mise en oeuvre de manière simple, pratique et rapide.

De préférence, l'accès est formé en retirant au moins une fenêtre du véhicule de transport routier thermique. De manière avantageuse, la fenêtre est déjà existante dans le véhicule thermique, ce qui permet de former un accès de manière simple et rapide, sans modifier la structure primaire du véhicule thermique. Il n'est ainsi pas nécessaire de faire homologuer de nouveau la structure primaire du véhicule, qui est laissée intacte pendant le procédé de conversion.

Selon un aspect de l'invention, le véhicule de transport routier thermique comporte des moyens d'ancrage des sièges sur l'ossature de plancher, et lors de l'étape d'installation du procédé de conversion, le réservoir de combustible est fixé à l'ossature de plancher grâce aux moyens d'ancrage du siège retiré. Le procédé de conversion permet ainsi avantageusement de réutiliser les moyens d'ancrage existants, pour une fixation à l'ossature de plancher de la structure primaire simple et rapide. Cela permet également de conserver intacte la structure primaire et ainsi d'éviter de devoir homologuer de nouveau la structure primaire.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique en coupe longitudinale d'un autocar à hydrogène selon une forme de réalisation de l'invention.
La figure 2 est une représentation schématique en perspective de profil de l'intérieur de la partie arrière de l'autocar à hydrogène de la figure 1.
La figure 3 est une représentation schématique en perspective de profil de l'extérieur de la partie arrière de l'autocar à hydrogène de la figure 1.
La figure 4 est une représentation schématique en coupe transversale de la figure 3.
La figure 5 est une représentation schématique en perspective arrière de l'intérieur de l'autocar à hydrogène de la figure 1.
La figure 6 est une représentation schématique en perspective arrière de l'extérieur de l'autocar à hydrogène de la figure 1.
La figure 7 est une représentation schématique d'un autocar thermique selon l'art antérieur.
La figure 8 est une représentation schématique d'un procédé de conversion de l'autocar thermique de la figure 7 selon un mode de réalisation de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un véhicule de transport routier de passagers de type électrique à pile à combustible, notamment obtenu par conversion d'un véhicule thermique, ainsi qu'un tel procédé de conversion.

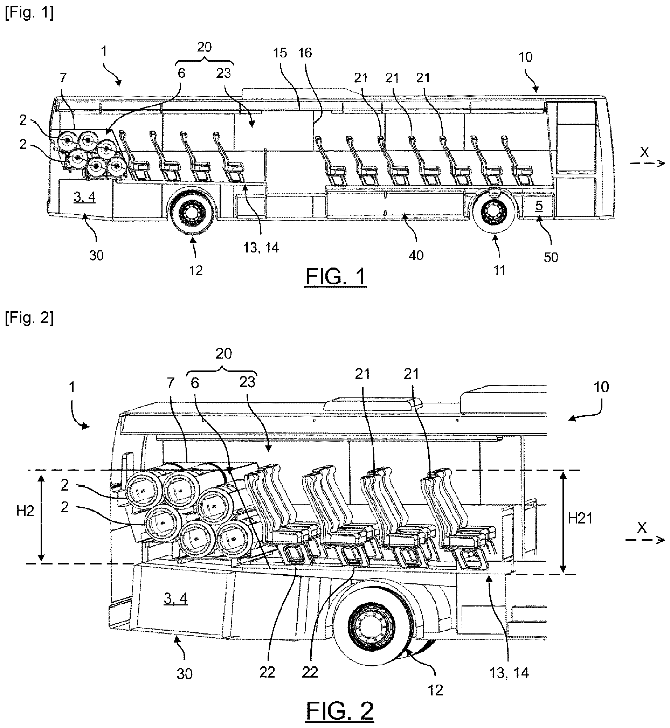

Il est décrit par la suite en référence aux figures 1 à 6 un véhicule de transport routier de passagers de type électrique à pile à combustible se présentant sous la forme d'un autocar à hydrogène, correspondant à la forme de réalisation préférée de l'invention. Il va cependant de soi que l'invention s'applique à d'autres types de véhicules de transport routier, tels qu'un autobus ou une voiture à titre d'exemples non limitatifs. L'invention pourrait également s'appliquer à des véhicules électriques équipés d'autres types de piles à combustible, telles qu'une pile à méthanol.

L'autocar à hydrogène 1 représenté sur la figure 1 s'étend selon un axe longitudinal X orienté d'arrière en avant et comprend classiquement un essieu avant 11 et un essieu arrière 12 sur lesquels est monté une structure primaire 10 formant l'ossature structurelle de l'autocar 1. La structure primaire 10 comprend une ossature de plancher 13 et une ossature de plafond 15 reliées ensemble par des montants verticaux définissant les parois verticales 16 de l'autocar 1. L'ossature de plancher 13, de même que l'ossature de plafond 15, comprend classiquement un ensemble de longerons et de traverses. L'autocar 1 comprend également un plancher d'habillage 14, par exemple une cloison, revêtant tout ou partie de l'ossature de plancher 13 comme ce sera décrit par la suite.

Comme illustré sur la figure 1, l'ossature de plancher 13 de l'autocar à hydrogène 1 délimite, en partie supérieure, un compartiment de vie 20, et en partie inférieure, un espace technique comportant un compartiment moteur 30. Le compartiment de vie 20 correspond ainsi au volume délimité par l'ossature de plancher 13, par l'ossature de plafond 15 de l'autocar 1 et par ses parois verticales 16. Le compartiment de vie 20 comprend des sièges 21, disposés usuellement en rangées, qui sont montés sur le plancher d'habillage 14 et fixés à l'ossature de plancher 13 de la structure primaire 10 par des moyens d'ancrage 22, tels que des fixations à vis.

Comme illustré sur la figure 1, le compartiment moteur 30 s'étend sous l'ossature de plancher 13 et donc sous le compartiment de vie 20, dans cet exemple en arrière de l'essieu arrière 12. Le compartiment moteur 30 héberge au moins en partie une chaîne de propulsion et/ou de traction reliée aux essieux avant et/ou arrière 11, 12 pour assurer la propulsion de l'autocar à hydrogène 1. La chaîne de propulsion comporte un (ou plusieurs) moteur(s) électrique(s) 3 ainsi qu'une (ou plusieurs) pile(s) à combustible 4 logés dans le compartiment moteur 30, un seul de chaque étant décrit par la suite. La pile à combustible 4 est configurée pour produire de l'énergie électrique, à bord de l'autocar 1, à destination du moteur électrique 3 afin d'assurer la propulsion de l'autocar 1. Dans l'exemple d'un autocar à hydrogène 1, la pile à combustible 4 est configurée pour produire de l'énergie électrique par réaction d'oxydoréduction à partir d'hydrogène et d'oxygène. L'hydrogène est stocké dans des réservoirs pressurisés embarqués à bord de l'autocar à hydrogène 1. L'oxygène est classiquement prélevé directement dans l'air pour réduire la masse et le volume embarqués.

Selon l'invention et toujours en référence à la figure 1, l'autocar à hydrogène 1 comprend un ou plusieurs réservoirs de combustible 2, en l'espèce d'hydrogène, qui sont montés dans le compartiment de vie 20. L'ensemble du ou des réservoirs de combustible 2 est relié fluidiquement à la pile à combustible 4 située dans le compartiment moteur 30, afin d'assurer son alimentation en hydrogène. Cela va à l'encontre des pratiques habituelles pour lesquelles les réservoirs de combustible 2 sont traditionnellement situés en dehors du compartiment de vie 2, et notamment sur le toit des autocars à hydrogène 1. Un tel emplacement présente notamment l'avantage d'être compatible avec n'importe quelle architecture d'autocar, et de permettre une intégration simple et pratique des réservoirs 2.

L'invention présente un intérêt particulier pour les autocars à hydrogène 1 issus de la conversion d'un autocar thermique. Un tel procédé de conversion est connu sous le terme de « rétrofit » ou « surcyclage » et permet de fabriquer un autocar à hydrogène 1 avec un minimum de matières nouvelles et en réutilisant le plus possible de l'autocar thermique existant. De tels autocars à hydrogène 1 obtenus par rétrofit comportent ainsi une architecture d'autocar thermique contrairement aux autocars à hydrogène d'origine. L'emplacement des réservoirs 2 proposé par l'invention permet de compenser le manque de place dans le compartiment moteur 30, initialement prévu pour héberger le moteur thermique. L'emplacement des réservoirs 2 proposé par l'invention permet également d'éviter l'augmentation du gabarit en hauteur de tels autocars 1. L'invention permet ainsi de conserver l'architecture d'origine de l'autocar 1, de manière pratique et économique.

De préférence, comme illustré sur la figure 1, l'ossature de plancher 13 de l'autocar à hydrogène 1 délimite également, en partie inférieure, un compartiment auxiliaire 50 adapté par exemple pour loger une batterie électrique 5. Le compartiment auxiliaire 50 est dans cet exemple situé en avant de l'essieu avant 11, afin d'augmenter la masse à l'avant de l'autocar 1 et équilibrer l'autocar 1. La batterie électrique 5 permet de produire de l'énergie électrique de manière complémentaire à la pile à combustible 4 et de stocker de l'énergie électrique produite par la pile à combustible 4. La batterie électrique 5 est alternativement située en soute. L'ossature de plancher 13 délimite également usuellement en partie inférieure un compartiment de soute 40, pour le stockage des bagages des passagers, qui est positionné dans cet exemple entre l'essieu avant 11 et l'essieu arrière 12.

Selon un premier aspect de l'invention, le plancher d'habillage 14 s'étend sur l'ensemble de l'ossature de plancher 13. Le plancher d'habillage 14 sépare notamment le compartiment de vie 20 du compartiment moteur 30. De préférence, le plancher d'habillage 14 assure l'étanchéité, et préférentiellement l'isolation thermique, entre le compartiment de vie 20 et le compartiment moteur 30.

Selon un deuxième aspect de l'invention, le plancher d'habillage 14 s'étend uniquement sur une portion de l'ossature de plancher 13, de sorte que le compartiment moteur 30 et le compartiment de vie 20 sont en communication fluidique via l'ossature de plancher 13. De préférence, l'ossature de plancher 13 s'étend à nu, dépourvue de plancher d'habillage 14, dans une zone dénudée entre le compartiment moteur 30 et le compartiment de vie 20. Le plancher d'habillage 14 s'étend de préférence sur l'ossature de plancher 13 en dehors de la zone dénudée. Ceci facilite le raccord entre les réservoirs de combustible 2 et la pile à combustible 4.

De préférence, selon le premier et le deuxième aspect de l'invention, le plancher d'habillage 14 sépare le compartiment de vie 20 du compartiment moteur auxiliaire 50. Le plancher d'habillage 14 sépare également le compartiment 20 du compartiment de soute 40.

De préférence, comme illustré sur les figures 1 et 2, tous les réservoirs de combustible 2 sont montés dans le compartiment de vie 20. Ceci permet notamment de conserver libre l'espace du compartiment de soute 40. Les réservoirs de combustible 2 sont de plus de préférence situés à l'arrière du compartiment de vie 20, derrière les sièges 21. Les réservoirs 2 sont ainsi alignés verticalement par rapport au compartiment moteur 30, de manière à limiter la longueur de raccord. Le raccord fluidique entre les réservoirs 2 et la pile à combustible 4 se présente ainsi sous la forme de conduites reliant les réservoirs 2 à la pile à combustible 4 via l'ossature de plancher 13, et dans certains cas à travers le plancher d'habillage 14. Les conduites s'étendent entre les longerons et traverses de l'ossature de plancher 13 de la structure primaire 10, de manière simple et pratique.

Dans l'exemple des figures 1 et 2, les réservoirs de combustible 2 s'étendent transversalement par rapport à l'axe longitudinal X, en pratique parallèlement à l'axe des rangées de sièges 21. Ceci permet de limiter l'encombrement du compartiment de vie 20. De préférence, le nombre de réservoirs 2 égal à six, ce nombre dépendant notamment de la taille des réservoirs 2, du type de véhicule de transport routier 1 et de pile à combustible 4 l'équipant, ainsi que de l'autonomie souhaitée.

En référence aux figures 1 et 2, les réservoirs de combustible 2 sont fixés à l'ossature de plancher 13 de la structure primaire 10 de l'autocar 1, recouverte ou non d'un plancher d'habillage 14, grâce à des moyens d'ancrage 22, tels que des fixations à vis.

Les réservoirs 2 sont de préférence regroupés, pour limiter le volume au sol occupé. Dans cet exemple, les réservoirs de combustible 2 sont empilés sur deux étages, trois premiers réservoirs 2 étant fixés à l'ossature de plancher 13 et trois autres réservoirs 2 étant montés de manière superposée sur les premiers. De préférence, l'empilement ne dépasse pas trois étages. Dans cet exemple, l'ossature de plancher 13 comporte une marche arrière de sorte que parmi les trois premiers réservoirs 2 fixés à l'ossature de plancher 13, celui à l'arrière est surélevé. Les réservoirs 2 superposés sont positionnés en quinconce par rapport aux trois premiers réservoirs 2. Toujours dans cet exemple, les réservoirs 2 sont cylindriques, de section circulaire. Il va cependant de soi que leur forme pourrait être différente.

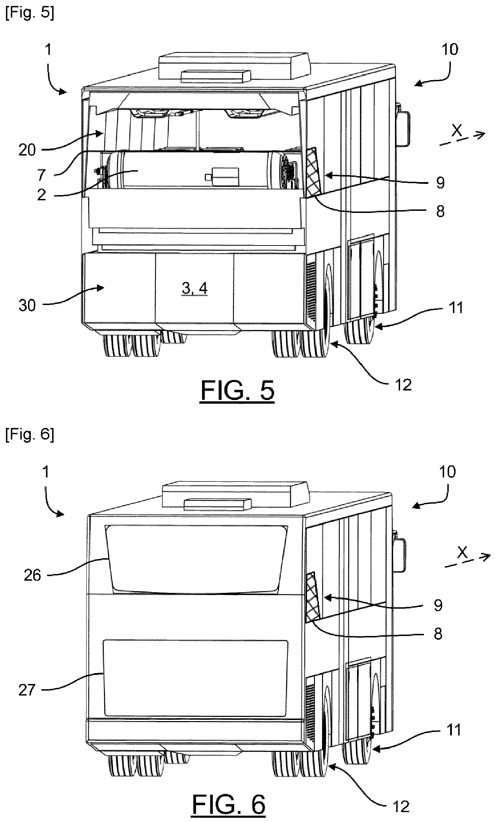

Comme illustré sur la figure 2, la hauteur totale H2 des réservoirs de combustible 2 est de préférence inférieure ou égale à la hauteur H21 des sièges. Comme illustré sur les figures 5 et 6, ceci permet de maintenir accessible de l'intérieur une fenêtre arrière 26 de l'autocar 1, qui est une issue de secours. En outre, ceci contribue à assurer la visibilité arrière du conducteur de l'autocar 1.

Selon un aspect de l'invention illustré sur les figures 1, 2 et 4, l'autocar à hydrogène 1 comprend une cloison de séparation 7 qui est montée dans le compartiment de vie 20 de manière à définir :
- d'une part, un espace passagers 23, dans lequel s'étendent les sièges 21, et
- d'autre part, un espace réservoir 6, dans lequel s'étendent les réservoirs 2.

La cloison de séparation 7 permet ainsi de confiner les réservoirs 2 dans un espace réservoir 6 dédié, séparé du reste du compartiment de vie 20. L'espace réservoir 6 est en communication fluidique avec le compartiment moteur 30 si l'ossature de plancher 13 est à nu entre le compartiment de vie 20 et le compartiment moteur 30. De préférence, la cloison de séparation 7 est étanche à l'hydrogène, de manière à éviter toute propagation d'une fuite d'hydrogène dans l'espace passagers 23. De préférence également, la cloison de séparation 7 est isolante thermiquement pour éviter que les changements de température au niveau des réservoirs d'hydrogène 2 n'affectent la température intérieure de l'espace passagers 23.

Toujours de préférence, la cloison de séparation 7 recouvre les réservoirs 2 de manière à minimiser le volume de l'espace réservoir 6 et maximiser celui de l'espace passagers 23. L'espace réservoir 6 est ainsi délimité par la cloison de séparation 7, et par les parois arrière et latérales de l'autocar 1. La cloison de séparation 7 se présente de préférence sous la forme d'une plaque mince, telle qu'une tôle métallique, par exemple en aluminium. La cloison de séparation 7 est de préférence recouverte d'un isolant thermique et/ou phonique. La jointure avec les parois arrière et latérales de l'autocar 1 est à titre d'exemple réalisée au moyen d'une pâte étanche, telle qu'une résine, pour éviter toute fuite d'hydrogène dans le compartiment de vie.

De préférence, comme illustré sur les figures 1 à 6, l'espace réservoir 6 est ouvert vers l'extérieur grâce à une ou plusieurs ouvertures d'aération 8. Ceci permet d'assurer l'aération de l'espace réservoir 6, voire du compartiment moteur 30 si l'ossature de plancher 13 est à nu, ainsi que d'en assurer la régulation thermique. Dans cet exemple, une ouverture d'aération 8 est représentée, formée latéralement, au niveau d'une portion d'une fenêtre 9 de l'autocar 1. De préférence, l'ouverture d'aération 8 se présente sous la forme d'une grille.

Il est décrit par la suite un procédé de conversion d'un autocar thermique en un autocar électrique à pile à combustible selon un mode de réalisation de l'invention. Comme vu précédemment, l'invention s'applique à tout véhicule de transport routier, tel qu'un autobus ou une voiture.

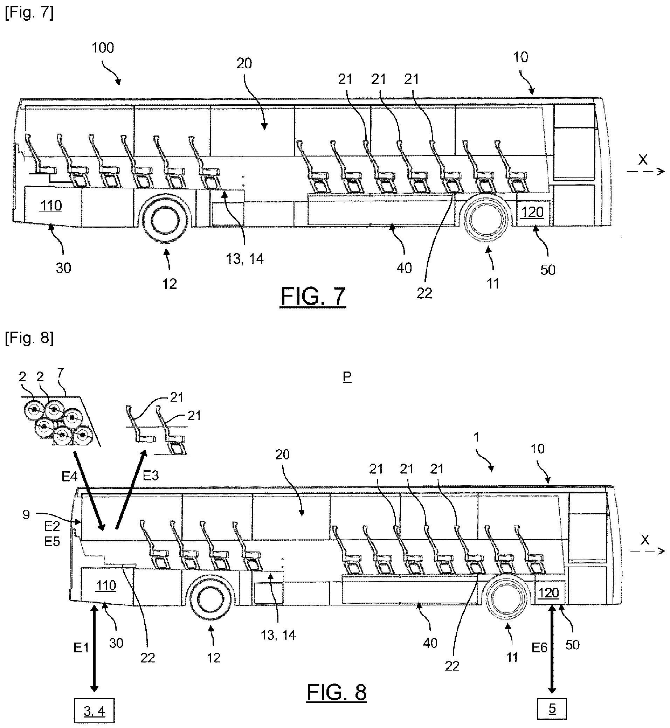

La figure 7 représente un autocar thermique 100 à partir duquel est mis en oeuvre le procédé de conversion P. L'autocar thermique 100 comprend une chaîne de propulsion comportant un ou plusieurs moteurs thermiques 110 et un ou plusieurs réservoirs de carburant 120 pour alimenter les moteurs thermiques 110. La structure de l'autocar thermique 100, hormis pour ce qui est de la motorisation, est identique à celle de l'autocar à hydrogène 1 précédemment décrit. L'autocar thermique 100 comprend ainsi notamment une structure primaire 10 comportant une ossature de plancher 13 qui délimite, en partie supérieure, un compartiment de vie 20 et, en partie inférieure, un espace technique comportant un compartiment moteur 30. Un plancher d'habillage 14 recouvre classiquement l'ensemble de l'ossature de plancher 13. Le moteur thermique 110 est logé dans le compartiment moteur 30. Les sièges 21 s'étendent dans le compartiment de vie 20, disposés classiquement en rangées. Les sièges 21 sont fixés à l'ossature de plancher 13 par des moyens d'ancrage 22. Les autres éléments de l'autocar thermique 100 ne sont pas rappelés.

En référence à la figure 8, le procédé de conversion P comprend :
- une étape de remplacement E1, dans le compartiment moteur 30, du moteur thermique 110 par un moteur électrique 3 et une pile à combustible 4,
- une étape de retrait E3 d'un ou de plusieurs sièges 21 du compartiment de vie 20, et
- une étape d'installation E4 d'un ou de plusieurs réservoirs de combustible 2 dans le compartiment de vie 20, à la place des sièges 21 retirés.

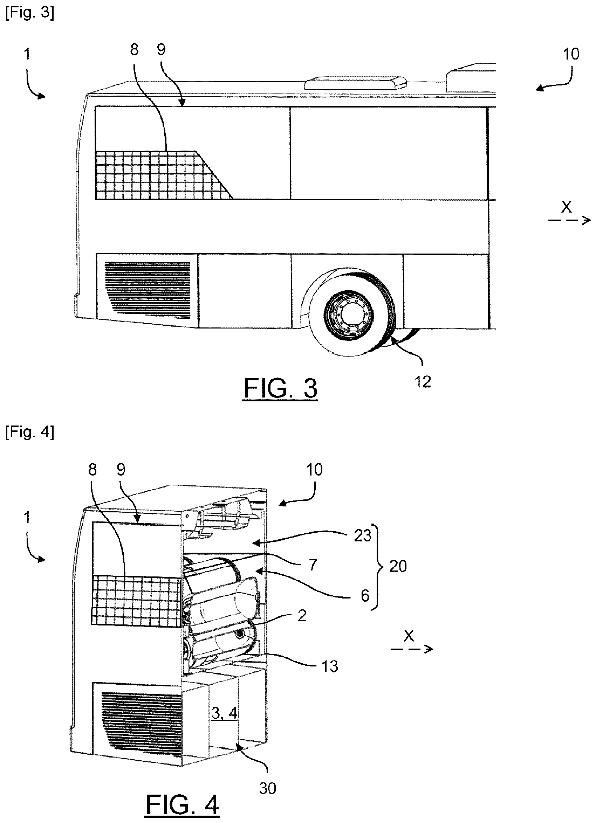

De manière préférée, le procédé de conversion P comprend une étape de formation E2 d'un accès dans le compartiment de vie 20 vers l'extérieur, de manière à faciliter la mise en oeuvre des étapes E3 et E4. De manière préférée, après les étapes E3 et E4, le procédé de conversion P comprend également une étape de montage E5, dans l'accès formé, d'une fenêtre 9 comportant une ouverture d'aération 8 telle qu'illustrée sur les figures 3 et 4. Ceci permet d'assurer l'aération des réservoirs 2.

En référence à la figure 8, l'étape de remplacement E1 est mise en oeuvre à partir de l'autocar thermique 100 de la figure 7. Lors de l'étape de remplacement E1, le moteur thermique 110 est retiré du compartiment moteur 30, de préférence via la trappe arrière 27 représentée sur la figure 6. Le volume libéré dans le compartiment moteur 30 permet d'y installer un moteur électrique 3 et une pile à combustible 4, notamment à hydrogène telle que décrite précédemment.

Comme illustré sur la figure 8, il est ensuite mis en oeuvre une étape de formation E2 d'un accès dans le compartiment de vie 20, de préférence en retirant une fenêtre existante de l'autocar, pour conserver la structure primaire 10 de l'autocar. L'accès permet d'accéder à l'intérieur du compartiment de vie 20 depuis l'extérieur.

Les étapes de retrait E3 et d'installation E4 sont de préférence mises en oeuvre via l'accès formé, de manière simple, pratique et rapide. Lors de l'étape de retrait E3, un ou plusieurs sièges 21 sont démontés puis extraits de l'autocar. Dans l'exemple de la figure 8, les sièges 21 concernés sont les deux rangées à l'arrière. De préférence, une à deux rangées de sièges 21 sont retirées. Comme illustré sur la figure 8, à la fin de l'étape de retrait E3, il existe un volume au sol libre pour mettre en oeuvre l'étape d'installation E4. L'étape d'installation E4 est ensuite mise en oeuvre en passant les réservoirs 2 via l'accès et en les fixant à l'ossature de plancher 13 à la place des sièges 21 retirés.

De préférence, lors de l'étape de retrait E3, une portion du plancher d'habillage 14 est retirée entre le compartiment moteur 30 et le compartiment de vie 20, de sorte que l'ossature de plancher 13 comporte une zone dénudée. L'ossature de plancher 13 est conservée intacte. La zone dénudée permet de faciliter l'étape d'installation E4 des réservoirs 2.

De préférence, en référence à la figure 8, les réservoirs 2 sont fixés à la structure primaire 10 de l'autocar grâce aux moyens d'ancrage 22 des sièges 21 retirés, ainsi que préférentiellement au moyen de fixations complémentaires existantes ou créées. Autrement dit, lors de l'étape de retrait E3, les sièges 21 sont retirés mais leurs moyens d'ancrage 22 sont conservés pour être réutilisés pour fixer les réservoirs 2. Ceci réduit le nombre de manipulations et permet de conserver la structure primaire 10 intacte, ce qui évite une nouvelle homologation. De préférence également, comme illustré sur la figure 8, la cloison de séparation 7 est également montée lors de l'étape d'installation E4.

Comme illustré sur la figure 8, l'étape de montage E5 est mise en oeuvre après l'étape d'installation E4. Lors de l'étape de montage E5, l'accès est fermé en installant une nouvelle fenêtre 9 comportant une ouverture d'aération 8 telle qu'illustré sur les figures 3 et 4. Ceci permet d'assurer l'aération de l'espace réservoirs 6.

De préférence, le procédé de conversion P comprend également une étape d'installation E6 d'une ou plusieurs batteries électrique 5 dans le compartiment auxiliaire 50 ou en soute, afin de stocker l'énergie électrique produite par la pile à combustible 2. De préférence, les réservoirs de carburant 120 sont préalablement retirés du compartiment auxiliaire 50. A la fin du procédé de conversion P, l'autocar 1 est de type à hydrogène, tel que décrit selon la forme de réalisation des figures 1 à 6.

A noter que les étapes E1, E2 et E6 peuvent être mises en oeuvre dans l'ordre souhaité. L'étape d'installation E4 est quant à elle conditionnée par la mise en oeuvre de l'étape de retrait E3, elle-même mise en oeuvre après l'étape de définition E2. A noter également que les étapes de retrait E3 et d'installation E4 pourraient alternativement être mises en oeuvre par un autre accès de l'autocar, tel que les portes d'entrée et de sortie, les trappes existantes ou le retrait de tôle d'habillages ou de vitrages.

Le procédé de conversion P est avantageusement compatible avec n'importe quelle architecture d'autocar thermique 100. Le procédé de conversion P permet avantageusement d'obtenir un autocar à hydrogène 1 de manière simple et économique, en limitant l'apport de nouvelles matières, le nombre de manipulations et le temps d'installation.

## Revendications

1. Véhicule de transport routier (1) de passagers comprenant une structure primaire (10), la structure primaire (10) comprenant une ossature de plancher (13) délimitant :
- en partie supérieure, un compartiment de vie (20) comportant une pluralité de sièges (21) fixés sur l'ossature de plancher (13), et
- en partie inférieure, au moins un compartiment moteur (30) comportant une chaîne de propulsion comprenant au moins un moteur électrique (3) et au moins une pile à combustible (4) pour alimenter le moteur électrique (3),
- ledit véhicule de transport routier (1) comprenant au moins un réservoir de combustible (2) monté dans le compartiment de vie (20) et relié fluidiquement à la pile à combustible (4) dans le compartiment moteur (30), le compartiment de vie (20) comprenant une cloison de séparation (7) étanche au combustible du réservoir (2), la cloison de séparation (7) délimitant de manière séparée un espace réservoir (6), dans lequel est monté le réservoir de combustible (2), et un espace passagers (23), dans lequel sont montés les sièges (21).

2. Véhicule de transport routier (1) selon la revendication 1, dans lequel l'ensemble du ou des réservoirs de combustible (2) est monté dans le compartiment de vie (20).

3. Véhicule de transport routier (1) selon l'une des revendications 1 et 2, dans lequel au moins un réservoir de combustible (2) est aligné verticalement par rapport au compartiment moteur (30), de préférence par rapport à la pile à combustible (4) dans le compartiment moteur (30).

4. Véhicule de transport routier (1) selon l'une des revendications 1 à 3, comprenant un plancher d'habillage (14) revêtant l'ossature de plancher (13) et séparant le compartiment de vie (20) du compartiment moteur (30).

5. Véhicule de transport routier (1) selon l'une des revendications 1 à 4, dans lequel le compartiment de vie (20) comporte au moins une ouverture d'aération (8) de l'espace réservoir (6) vers l'extérieur, l'ouverture d'aération (8) se présentant de préférence sous la forme d'une grille.

6. Véhicule de transport routier (1) selon l'une des revendications 1 à 5, dans lequel la cloison de séparation (7) est isolante thermiquement.

7. Procédé de conversion (P) d'un véhicule de transport routier thermique (100) de passagers en un véhicule de transport routier électrique (1) selon l'une des revendications 1 à 6, ledit véhicule de transport routier thermique (100) comprenant une structure primaire (10), la structure primaire (10) comprenant une ossature de plancher (13) délimitant :
- en partie supérieure, un compartiment de vie (20) comportant une pluralité de sièges (21) fixés sur l'ossature de plancher (13), et
- en partie inférieure, au moins un compartiment moteur (30) comprenant une chaîne de propulsion comprenant au moins un moteur thermique (110),
- ledit procédé de conversion (P) comprenant :
- une étape de remplacement (E1), dans le compartiment moteur (30), du moteur thermique (110) par au moins un moteur électrique (3) et au moins une pile à combustible (4) pour alimenter le moteur électrique (3),
- une étape de retrait (E3) d'au moins un siège (21) du compartiment de vie (20), et
- une étape d'installation (E4) d'au moins un réservoir de combustible (2) dans le compartiment de vie (20), à la place du siège (21) retiré, et
- une étape d'installation dans le compartiment de vie (20) d'une cloison de séparation (7) étanche au combustible du réservoir (2), la cloison de séparation (7) délimitant de manière séparée un espace réservoir (6), dans lequel est monté le réservoir de combustible (2), et un espace passagers (23), dans lequel sont montés les sièges (21).

8. Procédé de conversion (P) selon la revendication 7, comprenant une étape de formation (E2), dans le compartiment de vie (20), d'au moins un accès vers l'extérieur, l'étape d'installation (E4) étant mise en oeuvre via ledit accès, l'accès étant de préférence formé en retirant au moins une fenêtre du véhicule de transport routier thermique (100).

9. Procédé de conversion (P) selon l'une des revendications 7 et 8, dans lequel le véhicule de transport routier thermique (100) comporte des moyens d'ancrage (22) des sièges (21) sur l'ossature de plancher (13), et dans lequel, lors de l'étape d'installation (E4), le réservoir de combustible (2) est fixé à l'ossature de plancher (13) grâce aux moyens d'ancrage (22) du siège (21) retiré.
